# EUROPÄISCHE PATENTSCHRIFT

(11) **EP 3 460 136 B1**
(45) Veröffentlichungstag und Bekanntmachung des Hinweises auf die Patenterteilung: **11.12.2019**
(21) Anmeldenummer: 17193177.7
(22) Anmeldetag: 26.09.2017
(51) Int. Cl.: B27C 1/10, B27D 3/04, E04B 1/86, B27G 13/02, B23C 3/30, B23C 5/22, B27C 5/00, B27F 1/02, B27M 3/00, E04B 1/82, E04B 1/84

(54) **VERFAHREN ZUR HERSTELLUNG EINES AKUSTIKELEMENTS**
METHOD FOR PRODUCING AN ACOUSTIC ELEMENT
PROCÉDÉ DE FABRICATION D'UN ÉLÉMENT ACOUSTIQUE

(43) Veröffentlichungstag der Anmeldung: 27.03.2019
(73) Patentinhaber: Toma Holz AG, 6018 Buttisholz (CH)
(72) Erfinder: Tschopp, Armin, 6018 Buttisholz (CH)
(74) Vertreter: P&TS SA (AG, Ltd.)

(56) Entgegenhaltungen:
- EP-A1- 1 138 842
- CH-B1- 699 442
- DE-A1-102004 061 138

## Beschreibung

### Technisches Gebiet

Die Erfindung bezieht sich auf ein Herstellungsverfahren für ein Akustikelement, insbesondere für die Verkleidung von Innenräumen zur Schallreduktion.

### Stand der Technik

Akustikelemente, auch Schallschluckelemente, sind bekannt, um insbesondere Wände und Decken von Innenräumen zu verkleiden. Diese Akustikelemente absorbieren den Schall, reduzieren den Wiederhall und verbessern somit die Raumakustik.

Eine Art von Akustikelementen sind flächige Holzelemente mit ersten Vertiefungen auf einer ersten Seite, die zum Raum gewandt ist, und zweiten Vertiefungen auf einer zweiten Seite, die zu einer Wand oder Decke gerichtet ist. Die ersten Vertiefungen sind oft als parallele und äquidistante Rillen ausgebildet. Die ersten und zweiten Vertiefungen schneiden sich teilweise, so dass das Holzelement weiter zusammenhält, und gleichzeitig Durchtrittsöffnungen für den Schall von der ersten zu der zweiten Seite des Akustikelements geschaffen werden. Dadurch wird der Schall in dem Akustikelement absorbiert. Dies kann weiter verbessert werden, wenn das flächige Akustikelement auf einem Schalldämmmaterial verlegt wird.

DE29616050 offenbart eine Akustikplatte mit parallelen, äquidistanten und konstant tiefen Rillen auf der ersten Seite. Auf der zweiten Seite sind Vertiefungen ebenfalls mit konstanter Tiefe geformt, deren Längsachse rechtwinkelig zu den Rillen angeordnet sind. An den Kreuzungspunkten zwischen den Rillen der ersten Seite und den Vertiefungen auf der zweiten Seite entsteht somit eine Durchtrittsöffnung für den Schall.

US2007193175 und EP1138842 offenbaren ein Akustikelement, dessen erste Vertiefungen auf der ersten Seite und zweite Vertiefungen auf der zweiten Seite parallel zueinander angeordnet sind. Die ersten Vertiefungen sind parallel, äquidistant und haben eine konstante Tiefe. Die zweiten Vertiefungen sind wellenförmig oder halbkreisförmig angeordnet, so dass Durchtrittsöffnungen zu den ersten Vertiefungen im tiefsten Bereich der zweiten Vertiefungen erzielt werden.

In US2007193175 wird das Akustikelement durch ein Pressformungsverfahren geformt. Dieses Verfahren ist aber limitiert auf die Verwendung von pressbaren Materialien und schliesst somit die Verwendung von Holz aus.

In EP1138842 werden die Vertiefungen des Akustikelements durch ein spanendes Verfahren aus einem Holzrohling geformt. Dazu wird eine Welle mit einer Mehrzahl von Scheibenfräswerkzeugen zum Ausfräsen der ersten Vertiefungen an der ersten Seite des Akustikelements angeordnet. Der Holzrohling wird mit einer Vorschubrichtung rechtwinkelig zu der Welle mit den Scheibenfräswerkzeugen durch die Fräsmaschine geführt, so dass auf der ersten Seite die ersten Vertiefungen mit konstanter Tiefe ausgefräst werden. Auf der zweiten Seite des Holzrohlings mindestens eine ebenfalls rechtwinkelig zu der Vorschubrichtung angeordnete Welle mit Scheibenfräswerkzeugen angeordnet. Die mindestens eine Welle auf der zweiten Seite kann rechtwinkelig zu der Vorschubbewegung verschoben werden, um so in bestimmten Abständen die halbkreisförmigen zweiten Vertiefungen auszufräsen. Zum Ausfräsen der zweiten Vertiefungen wird entweder die Vorschubbewegung angehalten oder die Welle mit den Scheibenfräswerkzeugen mit der Vorschubbewegung mitgeführt, so dass die Rotationsachse der Scheibenfräswerkzeuge bezüglich des Holzrohlings keine Relativbewegung in die Vorschubrichtung durchführt. Diese Lösung ist aber auf halbkreisförmige zweite Vertiefungen beschränkt und ist entweder aufgrund des Anhaltens für das Ausfräsen der zweiten Vertiefungen langsam oder aufgrund des Mitführmechanismus der Welle aufwendig. Zusätzlich ist eine Änderung der Parameter der zweiten Vertiefungen aufwendig, da eine neue Positionierung oder ein Austausch der Scheibenfräswerkzeugen aufwendig ist.

### Darstellung der Erfindung

Es ist Aufgabe der Erfindung, ein verbessertes Verfahren zur Herstellung von Akustikelementen mit ersten und zweiten Vertiefungen entlang der gleichen Richtung bereitzustellen, das die Nachteile des Stands der Technik beseitigt. Insbesondere soll das Verfahren für Holzrohlinge geeignet sein, schnell durchführbar zu sein, die Parameter der Form der zweiten Vertiefungen einfach zu verändern und mit einer einfachen Maschine durchführbar sein.

Erfindungsgemäss wird diese Aufgabe durch ein Verfahren nach Anspruch 1 gelöst. Durch das Ausspanen der zweiten Vertiefungen mit mindestens einem Hobelkopf mit einer Relativbewegung der Rotationsachse des mindestens einen Hobelkopfs zu dem Materialrohling in die Vorschubrichtung können die zweiten Vertiefungen ohne Unterbrechung der Vorschubbewegung sehr schnell ausgespant werden, die spanende Maschine sehr einfach ausgebildet werden und die Formparameter der zweiten Vertiefungen einfach verändert werden. Durch die Geschwindigkeit der Stellbewegung des Hobelkopfs und die Geschwindigkeit der Vorschubbewegung kann die Form der zweiten Vertiefungen in die erste Richtung sehr einfach variiert werden. Auch die Form der zweiten Vertiefungen in Achsrichtung des mindestens einen Hobelkopfs kann durch einen Austausch des Hobelkopfs schnell und vor allem präzise durchgeführt werden. Insbesondere erlaubt der wesentlich stabilere Hobelkopf eine Überlagerung von zwei relativen Bewegungsrichtungen (Stellrichtung und Vorschubrichtung) der Rotationsachse des Hobelkopfs zu dem Materialrohling.

Diese Offenbarung beschreibt auch ein nicht-beanspruchtes Akustikelement. Dieses Akustikelement weist erste Vertiefungen auf einer ersten Seite und zweite Vertiefungen auf einer der ersten Seite gegenüberliegenden zweiten Seite auf. Die ersten Vertiefungen und die zweiten Vertiefungen erstrecken sich mit Ihrer Längsachse entlang einer ersten Richtung. Die ersten Vertiefungen und die zweiten Vertiefungen schneiden sich, so dass Öffnungen zwischen den ersten Vertiefungen der ersten Seite und den zweiten Vertiefungen der zweiten Seite entstehen.

Weitere vorteilhafte Ausführungsformen sind in den abhängigen Ansprüchen angegeben.

In einem Ausführungsbeispiel weist die Relativbewegung eine Geschwindigkeit auf, die mindestens der halben Geschwindigkeit der Vorschubbewegung des Materialrohlings in der spanenden Maschine entspricht. Vorzugsweise weist die Relativbewegung eine Geschwindigkeit auf, die grundsätzlich der Geschwindigkeit der Vorschubbewegung entspricht. Grundsätzlich der Geschwindigkeit der Vorschubbewegung entsprechend soll auch noch kleine Hin- und Herbewegung der Rotationsachsen des mindestens einen Hobelkopfs in die Vorschubrichtung umfassen. Diese Hin- und Herbewegungen können die Qualität der gespanten zweiten Vertiefungen weiter verbessern.

In einem Ausführungsbeispiel wird schneiden sich die ersten und zweiten Vertiefungen in dem Bereich der zweiten Vertiefungen, in dem die Tiefe grösser als ein Schwellwert ist. Der Schwellwert ergibt sich zum Beispiel aus der Dicke des Holzrohlings abzüglich der Tiefe der ersten Vertiefungen (im Bereich der Öffnungen).

In einem Ausführungsbeispiel ist die Vorschubrichtung rechtwinkelig zu der Achsrichtung und/oder zu der Stellrichtung.

In einem Ausführungsbeispiel wird die sich rechtwinkelig zu der ersten Richtung erstreckende Breite der zweiten Vertiefungen in Richtung von der zweiten Seite zu der ersten Seite kleiner. Dies verbessert die Absorption des Schalls auf der zweiten Seite des Akustikelements weiter. Dies kann zum Beispiel durch Hobelzähne des Hobelkopfs erreicht werden, deren Breite (in Achsrichtung) von aussen nach innen (in radialer Richtung hin zur Rotationsachse des Hobelkopfs) grösser wird.

In einem Ausführungsbeispiel sind die ersten Vertiefungen parallel zueinander angeordnete Rillen.

In einem Ausführungsbeispiel haben die ersten Vertiefungen eine konstante Tiefe.

In einem Ausführungsbeispiel ist jede erste Vertiefung mit einer Mehrzahl von entlang der Längsachse der ersten Vertiefung angeordneten zweiten Vertiefungen durch die Öffnungen verbunden.

In einem Ausführungsbeispiel sind die Öffnungen und/oder die zweiten Vertiefungen in Verbindung mit einer ersten ersten Vertiefung bzw. einer ersten Gruppe von ersten Vertiefungen zu Öffnungen und/oder zweiten Vertiefungen in Verbindung mit einer zweiten ersten Vertiefung bzw. einer zweiten Gruppe von ersten Vertiefungen in der ersten Richtung versetzt angeordnet. Vorzugsweise sind die erste und zweite erste Vertiefung benachbart oder wechseln sich die ersten Vertiefungen der ersten und zweiten Gruppe (in Richtung rechtwinkelig zu der ersten Richtung) ab.

In einem Ausführungsbeispiel haben die zweiten Vertiefungen eine entlang der ersten Richtung variable Tiefe, wobei d

In einem Ausführungsbeispiel werden auf einer dritten Seite des Akustikelements eine Feder und auf einer der dritten Seite gegenüberliegenden vierten Seite des Akustikelements eine Nut ausgeformt. Dadurch können mehrere Akustikelemente durch eine Nut-Feder-Verbindung zu einem flächigen Element beliebiger Grösse zusammengesetzt werden können.

### Kurze Beschreibung der Figuren

Die Erfindung wird anhand der beigefügten Figuren näher erläutert, wobei zeigen
- **Fig. 1**: eine Ansicht einer ersten Seite eines ersten Ausführungsbeispiels des Akustikelements;
- **Fig. 2**: eine Ansicht einer zweiten Seite des ersten Ausführungsbeispiels des erfindungsgemässen Akustikelements;
- **Fig. 3**: ein Schnitt entlang der Linie III-III der Fig. 1 des ersten Ausführungsbeispiels des Akustikelements;
- **Fig. 4**: ein Schnitt entlang der Linie IV-IV der Fig. 1 des ersten Ausführungsbeispiels des Akustikelements;
- **Fig. 5**: ein Schnitt entlang der Linie V-V der Fig. 1 des ersten Ausführungsbeispiels des Akustikelements;
- **Fig. 6**: eine Ansicht einer ersten Seite eines zweiten Ausführungsbeispiels des Akustikelements;
- **Fig. 7**: ein Schnitt entlang der Linie VII-VII der Fig. 6 des zweiten Ausführungsbeispiels des Akustikelements;
- **Fig. 8**: eine Akustikplatte zusammengesetzt aus einer Mehrzahl von Akustikelementen;
- **Fig. 9**: eine schematische Darstellung einer spanenden Maschine zur Herstellung des Akustikelements;
- **Fig. 10**: eine dreidimensionale Ansicht eines Ausführungsbeispiels eines Hobelkopfs für das Ausspanen der zweiten Vertiefungen; und
- **Fig. 11**: ein Ausführungsbeispiel eines Schneideprofils von Hobelmessern des ersten und zweiten Hobelkopfs.

### Wege zur Ausführung der Erfindung

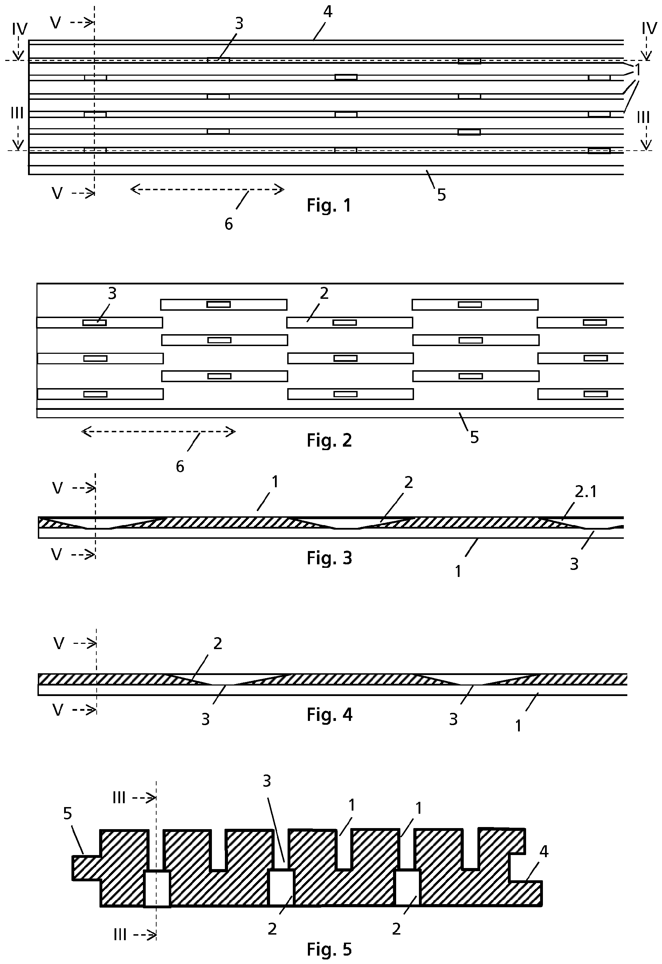

Fig. 1 bis 5 zeigen ein erstes Ausführungsbeispiel eines Akustikelements. Das Akustikelement ist vorzugsweise ausgebildet zur Schallabsorption bzw. zur Hallreduktion an Abgrenzungen wie Wänden, Decken und/oder Böden von Räumen flächig angeordnet zu werden. Die Räume können dabei geschlossen sein, wie in Hallen, Sälen, Zimmern, etc. oder offen, wie in Höfen, Überdachungen, etc..

Das Akustikelement weist eine erste Seite (siehe Fig. 1) und eine der ersten Seite gegenüberliegende Seite (siehe Fig. 2) auf. Die erste Seite ist vorzugsweise zu dem Raum hin gerichtet, während die zweite Seite vorzugsweise zu der Abgrenzung hin gerichtet ist, d.h. mit der zweiten Seite auf der Abgrenzung angeordnet wird. Das Akustikelement ist vorzugsweise brett- oder plattenförmig ausgebildet, wobei die erste und zweite Seite die flächige Seite des Bretts oder der Platte ausbilden. Vorzugsweise ist das Akustikelement viereckig, vorzugsweise rechteckig, so dass die dritte Seite, die der dritten Seite gegenüberliegende vierte Seite, die fünfte Seite und die der fünften Seite gegenüberliegende sechste Seite ein Viereck, vorzugsweise ein Rechteck, ausbilden. Vorzugsweise sind die erste und zweite Seite parallel angeordnet. Vorzugsweise sind die dritte und vierte Seite parallel angeordnet. Vorzugsweise sind die fünfte und sechste Seite parallel angeordnet. Vorzugsweise ist die erste und/oder zweite Seite rechtwinkelig zu der dritten, vierten, fünften und/oder sechsten Seite angeordnet. Vorzugsweise ist die dritte und/oder vierte Seite rechtwinkelig zu der ersten, zweiten, fünften und/oder sechsten Seite angeordnet. Vorzugsweise ist die fünfte und/oder sechste Seite rechtwinkelig zu der ersten, zweiten dritten und/oder vierten Seite angeordnet.

Vorzugsweise ist das Akustikelement ein Akustikbrett. Ein Akustikbrett hat vorzugsweise eine Breite (Abstand zwischen dritter und vierter Seite), die kleiner als die Länge, vorzugsweise als die halbe Länge, vorzugsweise als ein Drittel der Länge, vorzugsweise als ein Viertel der Länge, vorzugsweise als ein Fünftel der Länge des Akustikbretts. Die Breite des Akustikbretts ist vorzugsweise kleiner als 1 m, vorzugsweise kleiner als 80 cm, vorzugsweise kleiner als 60 cm, vorzugsweise kleiner als 50 cm, vorzugsweise kleiner als 40 cm.

Die erste Seite weist erste Vertiefungen 1 auf. Die ersten Vertiefungen 1 erstrecken sich mit ihrer Längsachse entlang einer ersten Richtung 6. Die erste Richtung 6 ist vorzugsweise parallel zu der dritten und/oder vierten Seite. Vorzugsweise verlaufen die ersten Vertiefungen 1 (durchgehend und/oder ohne Unterbrechung) von der fünften zu der sechsten Seite. Vorzugsweise haben die ersten Vertiefungen entlang der ersten Richtung 6 (von der fünften bis zu der sechsten Seite) eine konstante Tiefe, eine konstante Breite und/oder eine konstante erste Querschnittsform. Es ist aber auch möglich, dass die Tiefe, die Breite und/oder die erste Querschnittsform entlang der ersten Richtung 6 variiert. Die erste Querschnittsform der (ersten oder zweiten) Vertiefung bezieht sich auf die Form der (ersten oder zweiten) Vertiefung in einem Schnitt rechtwinkelig zu der ersten Richtung 6. Die erste Querschnittsform der ersten Vertiefung 1 ist vorzugsweise viereckig, vorzugsweise rechteckig. Allerdings können auch andere erste Querschnittsformen verwendet werden, wie zum Beispiel trapez-, teilkreis-, teilelipsenförmig, etc.. Die ersten Vertiefungen bilden vorzugsweise parallele Rillen (mit gleichem Abstand) auf der ersten Seite aus. Der Abstand einer ersten Vertiefung 1 zur nächsten benachbarten ersten Vertiefung 1 (in einer Richtung rechtwinkelig zu der ersten Richtung 1 und/oder rechtwinkelig zu der Richtung von der ersten zu der zweiten Seite) ist vorzugsweise gleich für alle ersten Vertiefungen 1. Der Abstand zwischen den ersten Vertiefungen 1 kann aber auch variieren. Die ersten Vertiefungen 1 haben vorzugsweise die Funktion, die Schallreflektion an der ersten Seite zu reduzieren bzw. die Schallabsorption zu verbessern.

Die zweite Seite weist zweite Vertiefungen 2 auf. Die zweiten Vertiefungen 2 erstrecken sich mit Ihrer Längsachse ebenfalls entlang der ersten Richtung 6. Die ersten Vertiefungen 2 schneiden sich mit den ersten Vertiefungen 1, so dass Durchtrittsöffnungen 3 (im folgenden kurz Öffnungen) zwischen der ersten Seite und der zweiten Seite des Akustikelements in den Schnittbereichen entstehen. Die Durchtrittsöffnungen leiten Schall von der ersten Seite zu der zweiten Seite und erhöhen somit ebenfalls die Schallabsorption.

Die zweiten Vertiefungen 2 überlappen zumindest teilweise mit den ersten Vertiefungen 1, wobei die Öffnungen 3 sich in zumindest einem Teil des überlappenden Bereichs befinden. Die zweiten Vertiefungen 2 sind vorzugsweise so überlappend mit den ersten Vertiefungen 1 angeordnet, dass die Öffnungen 3 die gleiche Breite wie die Breite der ersten Vertiefungen 1 aufweisen. Die Breite der zweiten Vertiefungen 2 ist vorzugsweise grösser gleich der Breite der ersten Vertiefungen 1. Vorzugsweise sind entlang einer (jeden) ersten Vertiefung 1 und/oder entlang einer Linie in der ersten Richtung 6 eine Mehrzahl von zweiten Vertiefungen 2 angeordnet, so dass die oder jede erste Vertiefung 1 eine Mehrzahl von Öffnungen 3 aufweist, die jeweils mit einer anderen zweiten Vertiefung 2 verbunden sind. Es ist aber auch möglich entlang einer (jeder) ersten Vertiefung 1 nur eine zweite Vertiefung 2 anzuordnen, die ein oder mehrere Öffnungen zu der ersten Vertiefung 1 aufweist.

Die zweiten Vertiefungen 2 haben vorzugsweise eine entlang der ersten Richtung 6 variable Tiefe. Fig. 3 und 4 zeigen die in der ersten Richtung 6 variable Tiefe der zweiten Vertiefungen 2. Vorzugsweise nimmt die Tiefe der zweiten Vertiefungen 2 von einem ersten Ende in die erste Richtung kontinuierlich (Steigung weist gleiches Vorzeichen auf) bis zur Öffnung 3 zu und nimmt von der Öffnung 3 bis zu einem dem ersten Ende entgegengesetzten Ende hin kontinuierlich ab. Vorzugsweise nimmt die Tiefe zwischen dem ersten Ende und der Öffnung 3 konstant (gleichbleibende Steigung) zu und nimmt von der Öffnung 3 zu dem zweiten Ende konstant zu. Eine zweite Querschittsform einer (ersten oder zweiten) Vertiefung ist die Form des Schnitts parallel zu der ersten Richtung 6 bzw. rechtwinkelig zu der zweiten Richtung durch die (erste oder zweite) Vertiefung. Die zweite Querschittsform der zweiten Vertiefungen 2 ist zum Beispiel trapezförmig, wobei die Öffnung 3 den Boden des Trapezes bildet und die abnehmenden Tiefen von den beiden Enden zu der Öffnung hin die Schenkel des Trapezes bildet. Allerdings sind auch andere zweite Querschnittsformen möglich, z.B. ein Trapez mit gebogenen, z.B. parabel- oder elipsenförmigen, Schenkeln. Ähnlich wie in US2007193175 wäre es auch möglich die zweiten Querschnittsforen der zweiten Vertiefungen 2 wellenförmig auszubilden, so dass zum Beispiel in den oder einigen Wellentälern die Öffnungen 3 entstehen. Die Schnittbereiche zwischen den ersten und zweiten Vertiefungen 1 und 2 sind vorzugsweise die Bereiche der zweiten Vertiefungen 2, deren Tiefe grösser als ein Schwellwert ist und/oder die sich mit den ersten Vertiefungen 1 überlappen. Der Schwellwert ist zum Beispiel die Dicke des Akustikelements (Abstand zwischen erster und zweiter Seite) abzüglich der konstanten Tiefe der ersten Vertiefungen 1. Allerdings kann der Schnittbereich ausserhalb der tiefsten Bereiche der zweiten Vertiefungen 2 liegen, wenn auch die Tiefe der ersten Vertiefungen 1 entlang der ersten Richtung 6 variabel sind und/oder wenn die zweiten Vertiefungen 2 in den tiefsten Bereichen nicht mit den ersten Vertiefungen 1 überlappen.

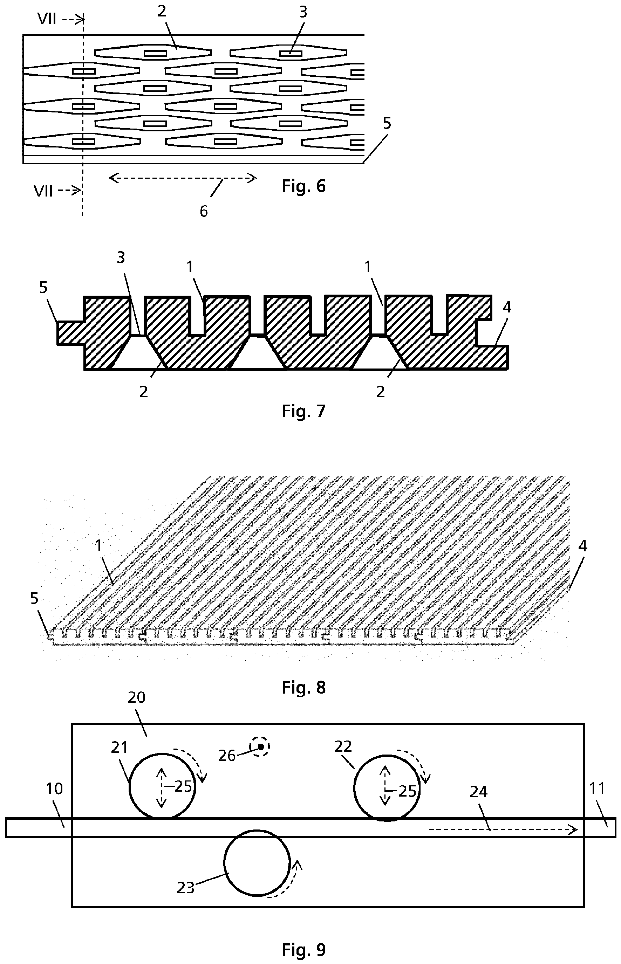

Vorzugsweise gibt es zweite Vertiefungen 2 einer ersten Gruppe und zweite Vertiefungen 2 einer zweiten Gruppe, wobei die zweiten Vertiefungen 2 der ersten Gruppe in der ersten Richtung 6 versetzt zu den zweiten Vertiefungen 2 der zweiten Gruppe angeordnet sind. Diese versetzte Anordnung stabilisiert das Akustikelement, da die Öffnungen 3 der ersten Vertiefungen 1 nicht alle in einer Linie entlang einer zweiten Richtung rechtwinkelig zu der ersten Richtung 6 (und rechtwinkelig zu einer dritten Richtung von der ersten zu der zweiten Seite) angeordnet sind. Vorzugsweise sind die zweiten Vertiefungen 2 der gleichen Gruppe zweier unterschiedlicher erster Vertiefungen 1 hingegen spiegelsymmetrisch bezüglich einer Mittenachse (parallel zu der ersten Richtung 6) zwischen den beiden ersten Vertiefungen 1 angeordnet. Vorzugsweise gehören die zweiten Vertiefungen 2 jeder zweiten ersten Vertiefung 1 zu der ersten Gruppe und die restlichen zweiten Vertiefungen der restlichen ersten Vertiefungen 1 zu der zweiten Gruppe. In Fig. 2 sind die zweiten Vertiefungen 2 so versetzt, dass sie in der zweiten Richtung nicht überlappen, d.h. die zweiten Vertiefungen 2 der ersten Gruppe sind zu denen der zweiten Gruppe um mindestens die Länge der zweiten Vertiefungen 2 verschoben. In Fig. 6 sind die zweiten Vertiefungen 2 so versetzt, dass sie in der zweiten Richtung zwar überlappen, aber die zweiten Vertiefungen 2 einer Gruppe nicht mit den Öffnungen 3 der zweiten Vertiefungen 2 der jeweils anderen Gruppe überlappen. Es ist aber auch möglich die zweiten Vertiefungen 2 nicht versetzt anzuordnen oder eine andere als die beschriebene Verschiebung zwischen den Gruppen zu realisieren.

Die erste Querschnittsform der zweiten Vertiefungen 2 ist in dem Ausführungsbeispiel in Fig. 2 viereckig. In einem Ausführungsbeispiel variiert die Breite der ersten Querschnittsformen der zweiten Vertiefungen 2 von der Öffnung 3 zu der zweiten Seite hin. Vorzugsweise verbreitern sich die zweiten Vertiefungen (kontinuierlich und/oder konstant) von der Öffnung 3 zu der zweiten Seite hin. Die erste Querschnittsform der zweiten Vertiefungen 2 ist in dem Ausführungsbeispiel in Fig. 7 trapezförmig, so dass die Seitenwände der zweiten Vertiefungen einen Winkel α ungleich Null Grad einschliessen. Andere erste Querschnittsformen der zweiten Vertiefungen 2 sind ebenfalls möglich.

Das Akustikelement weist an der dritten Seite eine Feder 5 und an der vierten Seite eine Nut 4. Die Nut 4 und die Feder 5 sind so angeordnet, dass die Feder 5 in die Nut 4 eines im ersten Querschnitt (d.h. ein Schnitt rechtwinkelig zu der ersten Richtung 6) gleich ausgebildeten Akustikelements gesteckt werden kann und somit mit einer Nut-Feder-Verbindung zu einem grösseren Akustikelement, einer Akustikplatte oder eine Akustikwand zusammengesetzt werden kann. Fig. 8 zeigt eine solche Akustikplatte oder -wand aus mehreren mit einer Nut-Feder-Verbindung zusammengesetzten Akustikelementen.

Vorzugsweise ist das Akustikelement aus Holz, vorzugsweise aus Massivholz hergestellt. Vorzugsweise wird das Akustikelement mit einer spanenden Bearbeitung aus einem Materialrohling, vorzugsweise aus Holz, gefertigt.

Fig. 9 zeigt nun eine spanende Maschine 20 zur Herstellung des Akustikelements 11 aus einem Materialrohling 10. Die spanende Maschine 20 ist insbesondere für das Ausspanen zumindest eines Teils der zweiten Vertiefungen 2 auf der zweiten Seite des Akustikelements bzw. des Materialrohlings mit einem spanenden Werkzeug (Spanwerkzeug) ausgebildet. Die ersten Vertiefungen 1, ein Teil der zweiten Vertiefungen 2, die Feder 5 und/oder die Nut 4 können bereits in dem Materialrohling 10 vorhanden sein oder nach Durchlauf der spanenden Maschine 20 durchgeführt werden. Vorzugsweise ist die spanende Maschine 20 aber ausgebildet, in einem Durchlauf des Materialrohlings 10 die zweiten Vertiefungen 2 und die ersten Vertiefungen 1, die Nut 4 und/oder die Feder 5 auszuspanen.

Die spanende Maschine 20 ist vorzugsweise eine Hobelmaschine.

Die spanende Maschine 20 weist eine Bewegungsvorrichtung zur Bewegung des Materialrohlings 10 entlang einer Durchlauflinie in einer Vorschubrichtung 24 (im Folgenden Vorschubbewegung) durch die spanende Maschine 20 auf. Vorzugsweise ist die Bewegungsvorrichtung so ausgebildet, dass die Vorschubbewegung des Materialrohlings 10 eine konstante Geschwindigkeit aufweist und/oder der Materialrohling 10 während des Durchlaufs nicht angehalten wird. Allerdings sind auch Ausführungsformen mit variabler Geschwindigkeit der Vorschubbewegung denkbar. Der Materialrohling 10 wird so in die spanende Maschine 20 eingeführt, dass die erste Richtung 6 des Materialrohlings der Vorschubrichtung 24 entspricht. Auf einer Seite der Durchlauflinie ist mindestens ein Spanwerkzeug zum Ausspanen der zweiten Vertiefungen 2 auf der zweiten Seite des Materialrohling 10. Vorzugsweise weist das mindestens eine Spanwerkzeug zwei in der Vorschubrichtung 24 versetzt angeordnete Spanwerkezuge auf. Vorzugsweise werden die zweiten Vertiefungen 2 der ersten Gruppe durch das erste Spanwerkzeug 21 und die zweiten Vertiefungen 2 der zweiten Gruppe durch das zweite Spanwerkzeug 22 ausgespant. Allerdings ist es auch möglich nur ein Spanwerkzeug für alle zweiten Vertiefungen 2 vorzusehen. Jedes Spanwerkzeug 21 und 22 zum Ausspanen der zweiten Vertiefungen 2 bzw. das mindestens eine Spanwerkzeug ist drehbar um eine Rotationsachse gelagert. Erfindungsgemäß ist die Rotationsachse rechtwinkelig zu der Vorschubrichtung 24 angeordnet. Die Rotation des Spanwerkzeugs 21, 22 ist so, dass die durch die Rotation verursachte Schnittrichtung der Vorschubrichtung 24 entgegengesetzt ist. Es ist aber auch möglich, dass die durch die Rotation verursachte Schnittrichtung in Richtung der Vorschubrichtung 24 zeigt.

Jedes Spanwerkzeug 21 und 22 zum Ausspanen der zweiten Vertiefungen 2 bzw. das mindestens eine Spanwerkzeug ist so in der spanenden Maschine 2 angeordnet, dass die Rotationsachse des Spanwerkzeugs in eine Stellrichtung 25 zu der Durchlauflinie bzw. zu dem Materialrohling 10 verschoben werden kann, um die zweiten Vertiefungen 2 auszuspanen. Erfindungsgemäß ist die Stellrichtung 25 rechtwinkelig zu der Achsrichtung 26. Der von der Rotationsachse durchgeführte Stellweg entspricht in dem Koordinatensystem der spanenden Maschine vorzugsweise einer exakten geraden Linie bzw. grundsätzlich einer geraden Linie. Da während dem Spanen der zweiten Vertiefungen 2 die Vorschubbewegung des Materialrohlings 10 nicht angehalten wird bzw. die Rotationsachse des mindestens einen Spanwerkzeugs 21, 22 nicht oder kaum in die Vorschubrichtung 24 bewegt wird, weist die Relativbewegung zwischen dem spanenden Werkzeug 21, 22 und dem Materialrohling in der Vorschubrichtung 24 bzw. in der ersten Richtung 6 eine Geschwindigkeit auf, die der Geschwindigkeit der Vorschubbewegung grundsätzlich entspricht. Allerdings ist es auch möglich andere Relativgeschwindigkeiten (Geschwindigkeit der Relativbewegung) vorzusehen. Vorzugsweise ist die Relativgeschwindigkeit zwischen der Rotationsachse des Spanwerkzeugs 21, 22 und dem Materialrohling 10 grösser als ein Viertel der Vorschubgeschwindigkeit, vorzugsweise grösser als die Hälfte der Vorschubgeschwindigkeit, vorzugsweise grösser als die drei Viertel der Vorschubgeschwindigkeit. Die Relativbewegung zwischen Rotationsachse des mindestens einen Spanwerkzeugs 21, 22 und dem Materialrohling in die erste Richtung 6 hat viele Vorteile. Die Herstellung der Akustikplatte kann beschleunigt werden ohne eine komplexe Mitführungsmechanismus für die Rotationsachsen vorsehen zu müssen. Insbesondere erlaubt die Relativbewegung einfach die zweite Querschnittsform der zweiten Vertiefungen 2 ohne einen Wechsel des Spanwerkzeugs 21, 22 einzustellen. Je nach Profil der Relativbewegung können beliebige zweite Querschnittsformen der zweiten Vertiefungen 2 erzeugt werden. Die zweiten Querschnittsformen der zweiten Vertiefungen 2 in Fig. 3 und 4 können durch eine Überlagerung einer konstanten Vorschubbewegung des Materialrohlings 10 mit einer konstanten Stellbewegung mit einer konstanten Stellgeschwindigkeit erreicht werden. Dadurch wird einer Relativbewegung erzielt, die eine gerade Linie entspricht, die einen Winkel mit der Vorschubrichtung 24 bzw. der ersten Richtung 6 einschliesst, die dem Steigungswinkel des Bodens der zweiten Vertiefung entspricht. Durch Variation der Stellgeschwindigkeit können auch gekrümmte zweite Querschnittsformen der zweiten Vertiefungen 2 erzielt werden. Vorzugsweise bleibt die Vorschubgeschwindigkeit dabei immer konstant. Allerdings ist es auch möglich, die Relativbewegung durch eine Änderung der Vorschubgeschwindigkeit zu variieren.

In einem Ausführungsbeispiel ist die geradlinige Stellbewegung der Rotationsachse von einer Hin- und Herbewegung in die Vorschubrichtung 24 überlagert, vorzugsweise eine oszillatorische Bewegung. In diesem Fall wird die Geschwindigkeit der Relativbewegung zwischen der Rotationsachse des mindestens einen Spanwerkzeugs 21, 22 und dem Materialrohling 10 aus der über eine zeitliche Periode der Hin- und Herbewegung gemittelten Geschwindigkeit der relativen Bewegung ermittelt. Die Maximalamplitude dieser Hin- und Herbewegung (von maximalen Ausschlag in eine Richtung zu maximalen Ausschlag in andere Richtung) in die Vorschubrichtung 24 ist dabei höchstens halb, vorzusgweise höchstens ein Drittel, vorzugsweise höchstens ein Viertel, vorzugsweise ein Fünftel, vorzugsweise höchsten ein Zehntel so gross wie die Maximalamplitude in der Stellrichtung 25. Die Hin- und Herbewegung hat dabei eine zeitliche Periode (Zeit für eine volle Hin- und Herbewegung bzw. für eine volle Oszillation), die so kurz ist, dass die Rotationsachse innerhalb einer zeitlichen Periode weniger als die Hälfte, vorzugsweise weniger als ein Drittel, vorzugsweise weniger als ein Viertel, vorzugsweise weniger als ein Fünftel, vorzugsweise weniger als ein Zehntel der Maximalamplitude der Stellbewegung in die Stellrichtung 25 zurücklegt.

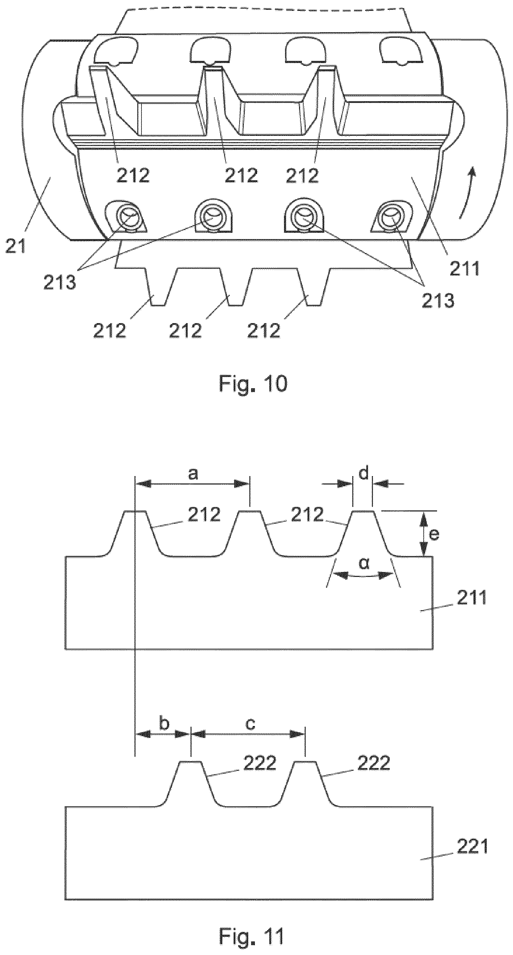

Erfindungsgemäss ist jedes Spanwerkzeug zum Ausspanen der zweiten Vertiefungen 2 bzw. das mindestens eine Spanwerkzeug ein Hobelkopf. Der Hobelkopf 21, 22 ist vorzugsweise zylinderförmig, wobei die Zylinderachse der Rotationsachse entspricht. Der Hobelkopf 21, 22 weist an der Mantelseite des Zylinders entlang der Achsrichtung 26 versetzt angeordnete Hobelzähne 212, 222 auf, die ausgebildet sind gleichzeitig unterschiedliche zweite Vertiefungen 2 in die zweiten Seite des Materialrohlings 10 zu hobeln bzw. zu spanen. Die gleichzeitig durch die versetzt angeordneten Hobelzähne 212, 222 eines Hobelkopfs 21, 22 erzeugen in der zweiten Richtung bzw. der Achsrichtung versetzt angeordnete zweite Vertiefungen 2. Die versetzt angeordneten Hobelzähne 212, 222 sind vorzugsweise gleich ausgebildet, so dass die gleichzeitig durch die versetzt angeordneten Hobelzähne 212, 222 eines Hobelkopfs 21, 22 erzeugten zweiten Vertiefungen 2 identisch und/oder symmetrisch ausgebildet sind. Vorzugsweise weist der Hobelkopf 21, 22 mindestens eine Hobelmesserbefestigung und mindestens ein Hobelmesser 211, 221 auf. Fig. 10 zeigt ein Ausführungsbeispiel eines Hobelkopfs 21. Vorzugsweise weist der Hobelkopf 21, 22 mehre Hobelmesserbefestigungen und mehrere Hobelmesser 211, 221, die über den Umfang des (Zylinders des) Hobelkopfs (gleichmässig) verteilt sind, auf. In Fig. 10 weist der der Hobelkopf 21 vier Hobelmesser 211, 221 auf (eine Hobelmesser ist nicht gezeigt, ein weiteres am oberen Bildrand nur im Ansatz gezeichnet). Allerdings sind auch Hobelköpfe mit einem Hobelmesser, mit zwei, drei, fünf oder mehr Hobelmessern möglich. Jedes Hobelmesser 211, 221 weist vorzugsweise eine Mehrzahl von in Achsrichtung versetzt angeordneten Hobelzähnen 212, 222 auf.

Fig. 11 zeigt ein Ausführungsbeispiel für die zwei unterschiedlichen Hobelmesser 211, 221 der beiden unterschiedlichen Hobelköpfe 21 und 22 bzw. für deren Schnittbilder. Durch die Form, Dimension und die Anordnung der Hobelzähne 212, 222 in einem Hobelkopf 21, 22 kann die erste Querschnittsform, die Dimension und die Anordnung der durch diesen Hobelkopf 21, 22 gehobelten zweiten Vertiefungen 2 eingestellt werden. Vorzugsweise haben alle Hobelzähne 212, 222 desselben Hobelkopfs 21, 22 bzw. der Hobelköpfe 21, 22 die gleiche Form und Dimension. Für die viereckige erste Querschnittsform der zweiten Vertiefungen 2 in Fig. 5 wäre ein viereckiger Hobelzahn 212, 222 notwendig. Für die erste Querschnittsform der zweiten Vertiefungen 2 in Fig. 7 ist ein trapezförmiger Hobelzahn wie er in den Fig. 10 und 11 gezeigt ist notwendig. Vorzugsweise variiert die sich in Achsrichtung 26 erstreckende Breite des Hobelzahns 212, 222 von Aussen nach Innen. Vorzugsweise vergrössert sich die sich in Achsrichtung 26 erstreckende Breite des Hobelzahns 212, 222 (kontinuierlich) von Aussen nach Innen. Vorzugsweise ist der Abstand b zweier benachbarter Hobelzähne aller des mindestens einen Hobelkopfs 21, 22 gleich dem Abstand zwischen zwei ersten Vertiefungen 1. Vorzugsweise haben die Hobelzähne 212 des ersten Hobelkopfs 21 einen Abstand a, der dem doppelten des Abstands der ersten Vertiefungen 1 entspricht. Vorzugsweise haben die Hobelzähne 222 des zweiten Hobelkopfs 22 einen Abstand c, der dem doppelten des Abstands der ersten Vertiefungen 1 entspricht und/oder der dem Abstand a entspricht. Vorzugsweise sind die Hobelzähne 212 des ersten Hobelkopfs 21 um den Abstand b in die Achsrichtung 26 versetzt zu den Hobelzähnen 222 des zweiten Hobelkopfs 22 angeordnet.

Die Verwendung des Hobelkopfs erlaubt es besonders gut, eine Überlagerung von Stellbewegung des Spanwerkzeugs 21, 22 und Vorschubbewegung des Materialrohlings zu realisieren. Der Hobelkopf hat weiterhin den Vorteil, dass die Anordnung der Vertiefungen in der Achsrichtung 26 mit den Hobelmessern sehr präzise ist. Der Austausch des Hobelmessers 211, 221 ist sehr einfach und unkompliziert. Eine präzise Einstellung der richtigen Positionierung der Scheibenfräswerkzeuge auf einer Welle im Stand der Technik ist hingegen sehr mühsam.

In dem Ausführungsbeispiel in Fig. 9 ist ein weiteres Spanwerkzeug 23 auf der anderen Seite der Durchgangslinie zum Spanen der ersten Vertiefungen 1. Vorzugsweise ist das Spanwerkzeug 23 ein Hobelkopf 23. Vorzugsweise weist der Hobelkopf 23 eine Mehrzahl von Hobelzähnen auf, die die ersten Vertiefungen 1 in den Materialrohling 10 hobeln. Der Hobelkopf 23 wird vorzugsweise während des Hobelns der ersten Vertiefungen 1 nicht in der Stellrichtung 25 verschoben, so dass die ersten Vertiefungen 1 eine konstante Tiefe in der ersten Richtung 6 aufweisen. Der Hobelkopf 23 dreht sich um eine Rotationsachse, die parallel zu der Rotationsachse der Spanwerkzeuge 21 und 22, parallel zu der Achsrichtung 26, rechtwinkelig zu der Vorschubrichtung 24 und/oder rechtwinkelig zu der Stellrichtung 25 ist. Die Rotation des Hobelkopfs 23 ist so, dass die durch die Rotation verursachte Schnittrichtung der Vorschubrichtung 24 entgegengesetzt ist. Es ist aber auch möglich, dass die durch die Rotation verursachte Schnittrichtung in Richtung der Vorschubrichtung 24 zeigt.

In einem Ausführungsbeispiel weist die spanende Maschine 20 weiterhin Spanwerkzeuge an der dritten und vierten Seite des Materialrohlings auf, um die Nut 4 und die Feder 5 zu spanen. Vorzugsweise sind auch dies Hobelköpfe.

## Patentansprüche

1. Verfahren zur Herstellung eines Akustikelements aufweisend die Schritte:
Formen des Akustikelements aus einem Materialrohling, wobei das aus dem Materialrohling geformte Akustikelement erste Vertiefungen (1) auf einer ersten Seite des Akustikelements und zweite Vertiefungen (2) auf einer der ersten Seite gegenüberliegenden zweiten Seite des Akustikelements aufweist, wobei die ersten Vertiefungen (1) sich mit Ihrer Längsachse entlang einer ersten Richtung (6) erstrecken, wobei die zweiten Vertiefungen (2) sich mit Ihrer Längsachse entlang der ersten Richtung (6) erstrecken, wobei die ersten Vertiefungen (1) und die zweiten Vertiefungen (2) sich schneiden, so dass Öffnungen zwischen den ersten Vertiefungen (1) der ersten Seite und den zweiten Vertiefungen (2) der zweiten Seite entstehen, wobei die zweiten Vertiefungen (2) mit mindestens einem Spanwerkzeug (21, 22) einer spanenden Maschine (20) aus dem Materialrohling (10) gespant werden, wobei der Materialrohling (10) die spanende Maschine (20) mit einer Vorschubbewegung in einer Vorschubrichtung (24) durchläuft, die parallel zu der ersten Richtung (6) des Akustikelements verläuft, wobei das mindestens eine Spanwerkzeug sich um eine parallel zu einer Achsrichtung (26) angeordnete Rotationsachse dreht, wobei das mindestens eine Spanwerkzeug während des Spanens der zweiten Vertiefungen (2) in eine Stellrichtung (25) verschoben wird, um die zweiten Vertiefungen (2) entlang der ersten Richtung (6) auszuspanen, wobei die Stellrichtung (25) rechtwinkelig zu der Achsrichtung (26) ist, wobei die Rotationsachse rechtwinkelig zu der Vorschubrichtung (24) angeordnet ist;
**dadurch gekennzeichnet, dass**
das mindestens eine Spanwerkzeug mindestens ein Hobelkopf (21, 22) ist, und
der Materialrohling während des Spanens der zweiten Vertiefungen (2) eine zu der Vorschubrichtung (24) parallele Relativbewegung bezüglich der Rotationsachse des mindestens einen Hobelkopfs (21, 22) durchführt.

2. Verfahren nach dem vorigen Anspruch, wobei der mindestens eine Hobelkopf mindestens zwei entlang der Achsrichtung (26) angeordnete Hobelzähne, die jeweils eine andere der zweiten Vertiefungen (2) ausspanen, aufweist.

3. Verfahren nach dem vorigen Anspruch, wobei jeder des mindestens einen Hobelkopf (21, 22) mindestens eine Hobelmesserbefestigung und mindestens ein Hobelmesser, das in der Hobelmesserbefestigung befestigt ist, aufweist, wobei jedes Hobelmesser mindestens zwei entlang der Achsrichtung (26) angeordnete Hobelzähne aufweist.

4. Verfahren nach Anspruch 2 oder 3, wobei sich die Breite in Achsrichtung (26) der Hobelzähne in einer radialer Richtung des Hobelkopfs (21, 22) von aussen nach innen vergrössert, so dass die sich rechtwinkelig zu der ersten Richtung (6) erstreckende Breite der zweiten Vertiefungen (2) in Richtung von der zweiten Seite zu der ersten Seite kleiner wird.

5. Verfahren nach einem der Ansprüche 2 bis 4, wobei der mindestens eine Hobelkopf (21, 22) einen ersten Hobelkopf (21) und einen zweiten Hobelkopf (22) aufweist, wobei der erste Hobelkopf (21) mindestens zwei Hobelzähne und der zweite Hobelkopf (21) mindestens zwei Hobelzähne, die versetzt zu den mindestens zwei Hobelzähnen des ersten Hobelkopfs (21) angeordnet sind, aufweist.

6. Verfahren nach dem vorigen Anspruch, wobei die mit dem ersten Hobelkopf (21) ausgespanten zweiten Vertiefungen (2) bezüglich zu den mit dem zweiten Hobelkopf (22) ausgespanten zweiten Vertiefungen (2) in die erste Richtung (6) versetzt angeordnet sind.

7. Verfahren nach einem der vorigen Ansprüche, wobei das Hobelwerkzeug (21, 22) während des Ausspanens einer der zweiten Vertiefungen (2) und während der Vorschubbewegung des Materialrohlings (10) in die Stellrichtung (25) zuerst an den Materialrohling (10) angenähert und danach von diesem wieder entfernt wird.

8. Verfahren nach dem vorigen Anspruch, wobei das Hobelwerkzeug (21, 22) mit konstanter Geschwindigkeit bis zu einer maximalen Tiefe der einen der zweiten Vertiefungen (2) angenähert und danach mit einer konstanten Geschwindigkeit entfernt wird.

9. Verfahren nach einem der vorigen Ansprüche, wobei die spanende Maschine (20) einen weiteren Hobelkopf (23) auf der ersten Seite des Akustikelements (11) aufweist, der die ersten Vertiefungen (1) aus dem Materialrohling (10) spant.

10. Verfahren nach einem der vorigen Ansprüche, wobei die ersten Vertiefungen (1) und die zweiten Vertiefungen (2) während des gleichen Durchlaufs des Materialrohlings (10) durch die spanende Maschine (20) auf der ersten und zweiten Seite des Akustikelements (11) aus dem Materialrohling (10) gespant werden.

11. Verfahren nach einem der vorigen Ansprüche, wobei jede oder eine erste Vertiefung (1) mit einer Mehrzahl von entlang der ersten Richtung (6) angeordneten zweiten Vertiefungen (2) mittels Öffnungen (3) verbunden ist.

12. Verfahren nach einem der vorigen Ansprüche, wobei auf einer dritten Seite des Akustikelements eine Feder (5) und auf einer der dritten Seite gegenüberliegenden vierten Seite des Akustikelements eine Nut (4) ausgeformt werden, so dass mehrere Akustikelemente durch eine Nut-Feder-Verbindung zu einem flächigen Element beliebiger Grösse zusammengesetzt werden können.

13. Verfahren nach einem der vorigen Ansprüche, wobei der Materialrohling ein Holzrohling ist.

## Claims

1. Method for producing an acoustic element, having the following steps:
forming the acoustic element from a material blank, wherein the acoustic element formed from the material blank has first recesses (1) on a first side of the acoustic element and second recesses (2) on a second side of the acoustic element, opposite the first side, wherein the first recesses (1) extend with their longitudinal axis along a first direction (6), wherein the second recesses (2) extend with their longitudinal axis along the first direction (6), wherein the first recesses (1) and the second recesses (2) intersect, so that openings are formed between the first recesses (1) of the first side and the second recesses (2) of the second side, wherein the second recesses (2) are cut out of the material blank (10) by at least one cutting tool (21, 22) of a cutting machine (20), wherein the material blank (10) passes through the cutting machine (20) with a feed movement in a feed direction (24), which extends parallel to the first direction (6) of the acoustic element, wherein the at least one cutting tool rotates about an axis of rotation arranged parallel to an axial direction (26), wherein, during the cutting of the second recesses (2), the at least one cutting tool is displaced in an adjusting direction (25) in order to cut the second recesses (2) out along the first direction (6), wherein the adjusting direction (25) is perpendicular to the axial direction (26), wherein the axis of rotation is arranged perpendicular to the feed direction (24);
**characterized in that**
the at least one cutting tool is at least one planing head (21, 22), and
during the cutting of the second recesses (2), the material blank carries out a relative movement parallel to the feed direction (24) with respect to the axis of rotation of the at least one planing head (21, 22).

2. Method according to the preceding claim, wherein the at least one planing head has at least two planing teeth arranged along the axial direction (26), each of which cuts out another of the two recesses (2).

3. Method according to the preceding claim, wherein each of the at least one planing head (21, 22) has at least one planing blade fastening and at least one planing blade, which is fixed in the planing blade fastening, wherein each planing blade has at least two planing teeth arranged along the axial direction (26).

4. Method according to Claim 2 or 3, wherein the width in the axial direction (26) of the planing teeth increases from outside to inside in a radial direction of the planing head (21, 22), so that the width of the second recesses (2) extending at right angles to the first direction (6) becomes smaller in the direction from the second side to the first side.

5. Method according to one of Claims 2 to 4, wherein the at least one planing head (21, 22) has a first planing head (21) and a second planing head (22), wherein the first planing head (21) has at least two planing teeth, and the second planing head (21) has at least two planing teeth, which are arranged to be offset relative to the at least two planing teeth of the first planing head (21).

6. Method according to the preceding claim, wherein the second recesses (2) cut out with the first planing head (21) are arranged to be offset in the first direction (6) with respect to the second recesses (2) cut out with the second planing head (22).

7. Method according to one of the preceding claims, wherein, during the cutting out of one of the two recesses (2) and during the feed movement of the material blank (10) in the adjusting direction (25), the planing tool (21, 22) is first brought close to the material blank (10) and then removed from the latter again.

8. Method according to the preceding claim, wherein the planing tool (21, 22) is brought close at constant speed as far as a maximum depth of the one of the two recesses (2) and is then removed at a constant speed.

9. Method according to one of the preceding claims, wherein the cutting machine (20) has a further planing head (23) on the first side of the acoustic element (11), which cuts the first recesses (1) out of the material blank (10).

10. Method according to one of the preceding claims, wherein the first recesses (1) and the second recesses (2) are cut out of the material blank (10) on the first and second side of the acoustic element (11) during the same pass of the material blank (10) through the cutting machine (20).

11. Method according to one of the preceding claims, wherein each or a first recess (1) is connected by means of openings (3) to a plurality of second recesses (2) arranged along the first direction (6).

12. Method according to one of the preceding claims, wherein a tongue (5) is shaped out of a third side of the acoustic element, and a groove (4) is shaped out of a fourth side of the acoustic element, opposite the third side, so that multiple acoustic elements can be assembled via a tongue-and-groove connection to form a flat element of any desired size.

13. Method according to one of the preceding claims, wherein the material blank is a wooden blank.

## Revendications

1. Procédé de fabrication d'un élément acoustique, le procédé comprenant les étapes suivantes :
former l'élément acoustique à partir d'une ébauche de matériau, l'élément acoustique formé à partir de l'ébauche de matériau comportant des premiers creux (1) sur un premier côté de l'élément acoustique et des deuxièmes creux (2) sur un deuxième côté de l'élément acoustique qui est opposé au premier côté, les premiers creux (1) s'étendant avec leur axe longitudinal dans une première direction (6), les deuxièmes creux (2) s'étendant avec leur axe longitudinal dans la première direction (6), les premiers creux (1) et les deuxièmes creux (2) se coupant de façon à ménager des ouvertures entre les premiers creux (1) du premier côté et les deuxièmes creux (2) du deuxième côté, les deuxièmes creux (2) étant réalisés par enlèvement de copeaux dans l'ébauche de matériau (10) à l'aide d'au moins un outil d'usinage (21, 22) d'une machine d'usinage (20), l'ébauche de matériau (10) passant à travers la machine d'usinage (20) suivant un mouvement d'avancement dans une direction d'avancement (24) qui s'étend parallèlement à la première direction (6) de l'élément acoustique, l'au moins un outil d'usinage tournant sur un axe de rotation disposé parallèlement à une direction axiale (26), l'au moins un outil d'usinage étant déplacé dans une direction de réglage (25) pendant l'usinage des deuxièmes creux (2) afin de ménager les deuxièmes creux (2) dans la première direction (6), la direction de réglage (25) étant perpendiculaire à la direction axiale (26), l'axe de rotation étant disposé perpendiculairement à la direction d'avancement (24);
**caractérisé en ce que**
l'au moins un outil d'usinage est au moins une tête de rabot (21, 22), et
l'ébauche de matériau effectue un mouvement relatif, parallèle à la direction d'avancement (24), par rapport à l'axe de rotation de l'au moins une tête de rabot (21, 22) lors de l'usinage des deuxièmes creux (2).

2. Procédé selon la revendication précédente, l'au moins une tête de rabot comportant au moins deux dents de rabot qui sont disposées le long de la direction axiale (26) et qui usinent par enlèvement de copeaux un autre des deuxièmes creux (2).

3. Procédé selon la revendication précédente, l'au moins une tête de rabot (21, 22) comportant au moins une fixation de lame de rabot et au moins une lame de rabot qui est fixée dans la fixation de lame de rabot, chaque lame de rabot comportant au moins deux dents de rabot disposées le long de la direction axiale (26).

4. Procédé selon la revendication 2 ou 3, la largeur dans la direction axiale (26) des dents de rabot augmentant de l'extérieur vers l'intérieur dans une direction radiale de la tête de rabot (21, 22) de sorte que la largeur des deuxièmes creux (2), s'étendant perpendiculairement à la première direction (6), devient plus petite dans la direction allant du deuxième côté au premier côté.

5. Procédé selon l'une des revendications 2 à 4, l'au moins une tête de rabot (21, 22) comportant une première tête de rabot (21) et une deuxième tête de rabot (22), la première tête de rabot (21) comportant au moins deux dents de rabot et la deuxième tête de rabot (21) comportant au moins deux dents de rabot décalées par rapport aux au moins deux dents de rabot de la première tête de rabot (21).

6. Procédé selon la revendication précédente, les deuxièmes creux (2) usinés avec la première tête de rabot (21) étant décalés dans la première direction (6) par rapport aux deuxièmes creux (2) usinés avec la deuxième tête de rabot (22).

7. Procédé selon l'une des revendications précédentes, l'outil de rabot (21, 22) est d'abord approché de l'ébauche de matériau (10), puis éloigné de celle-ci, pendant l'usinage de l'un des deuxièmes creux (2) et pendant le mouvement d'avancement de l'ébauche de matériau (10) dans la direction de réglage (25).

8. Procédé selon la revendication précédente, l'outil de rabot (21, 22) est approché à une vitesse constante jusqu'à une profondeur maximale de l'un des deuxièmes creux (2) puis éloigné à une vitesse constante.

9. Procédé selon l'une des revendications précédentes, la machine d'usinage (20) comportant une autre tête de rabot (23) sur le premier côté de l'élément acoustique (11) qui usine les premiers creux (1) par enlèvement de copeaux de l'ébauche de matériau (10).

10. Procédé selon l'une des revendications précédentes, les premiers creux (1) et les deuxièmes creux (2) étant usinés par enlèvement de copeaux de l'ébauche de matériau (10) à l'aide de la machine d'usinage (20) sur les premier et deuxième côtés de l'élément acoustique (11) pendant le même passage de l'ébauche de matériau (10).

11. Procédé selon l'une des revendications précédentes, chaque ou un premier évidement (1) étant relié à une pluralité de deuxièmes creux (2), ménagés dans la première direction (6), à l'aide d'ouvertures (3).

12. Procédé selon l'une des revendications précédentes, une languette (5) étant formée sur un troisième côté de l'élément acoustique et une rainure (4) étant ménagée sur un quatrième côté de l'élément acoustique opposé au troisième côté de façon à pouvoir assembler une pluralité d'éléments acoustiques par une liaison à rainure et languette pour former un élément plat de taille quelconque.

13. Procédé selon l'une des revendications précédentes, l'ébauche de matériau étant une ébauche en bois.
